Europäisches Patentamt

European Patent Office

Office européen des brevets

(19)

(11) Veröffentlichungsnummer : **0 338 503 B1**

(12) **EUROPÄISCHE PATENTSCHRIFT**

(45) Veröffentlichungstag der Patentschrift :
21.10.92 Patentblatt 92/43

(51) Int. Cl.$^5$ : **E04D 13/08**, F16L 43/00

(21) Anmeldenummer : **89106912.2**

(22) Anmeldetag : **18.04.89**

(54) Dachrinnenablaufrohrbogen.

(30) Priorität : **18.04.88 DE 3812872**

(43) Veröffentlichungstag der Anmeldung :
**25.10.89 Patentblatt 89/43**

(45) Bekanntmachung des Hinweises auf die
Patenterteilung :
**21.10.92 Patentblatt 92/43**

(84) Benannte Vertragsstaaten :
**AT BE CH DE FR IT LI LU NL**

(56) Entgegenhaltungen :
**EP-A- 0 008 935
DE-A- 2 536 852
DE-A- 2 908 620
GB-A- 163 483
US-A- 2 654 619
US-A- 2 966 372
US-A- 3 222 441
US-A- 3 920 271**

(73) Patentinhaber : **Rösle Metallwarenfabrik
GmbH & Co. KG
Johann-Georg-Fendt-Strasse 38
W-8952 Marktoberdorf (DE)**

(72) Erfinder : **Schäfer, Erhard
Peter-Dörfler-Strasse 7
W-8952 Marktoberdorf (DE)**

(74) Vertreter : **Weickmann, Heinrich, Dipl.-Ing. et
al
Patentanwälte H.Weickmann, Dr. K.Fincke
F.A. Weickmann, B. Huber Dr. H. Liska, Dr. J.
Prechtel Kopernikusstrasse 9 Postfach 8608
20
W-8000 München 86 (DE)**

## Beschreibung

Die Erfindung betrifft einen Dachrinnenablaufrohrbogen mit einem durchmessergrößeren und einem durchmesserkleineren Ende, wobei an dem durchmesserkleineren Ende ein konischer Einsteck- und Einweiseabschnitt vorgesehen ist, der über eine Schwelle in einen Hauptabschnitt übergeht.

Aus der US-A-2 966 372 ist ein Rohrbogen mit einem durchmessergrößeren und einem durchmesserkleineren Ende bekannt. Der Rohrbogen ist aus faserimprägniertem Werkstoff hergestellt. Das durchmesserkleinere Ende ist von einem konischen Einsteckabschnitt gebildet. Dieser Einsteckabschnitt grenzt an eine Schwelle an, die über den Außenumfang des Rohrbogens vorspringt. Die Konizität des Einsteckabschnitts ist von der Schwelle bis zur zugehörigen Endkante konstant. Dabei ist die Konizität so bemessen, daß sie auch das Einfädeln des Einsteckabschnitts in das Anschlußrohrelement erleichtert. Die Schwelle ist aus dem faserbewehrten Material geformt.

Bei Rohren aus faserbewehrtem Material, insbesondere Faserzementmaterial, kann mit einer hohen Form- und Dimensionskonstanz gerechnet werden. Deshalb ist damit zu rechnen, daß der konische Einsteckabschnitt ohne großen Kraftaufwand in ein Anschlußrohrelement eingesteckt werden kann bis zur Anlage eines Endes des Anschlußrohrelements an der Schwelle.

Aus der DE-A 25 36 852 ist ein Rohrbogen bekannt, der in seinem einen Endbereich einen zylindrischen Einsteckabschnitt aufweist. Dieser zylindrische Einsteckabschnitt geht über eine konische schwellenbildende Erweiterung in einen Hauptabschnitt über. Der Hauptabschnitt ist somit auf seiner ganzen restlichen Bogenlänge gegenüber dem Einsteckabschnitt erweitert oder - anders ausgedrückt - der Einsteckabschnitt ist im wesentlichen auf seiner ganzen Länge gegenüber dem Durchmesser des Hauptabschnitts eingeengt. An den Einsteckabschnitt schließt sich zur freien Endkante hin ein konischer Einweiseabschnitt von verstärkter Konizität an. Bei dieser bekannten Ausführungsform ist zwar das Einfädeln dank dem Vorhandensein des stärker konischen Einweiseabschnitts verhältnismäßig unproblematisch. Wenn aber einmal eingefädelt ist, hängt das weitere Zusammenstecken von der gegenseitigen Durchmesserabstimmung des zylindrischen Einsteckabschnitts einerseits und des Innendurchmessers des Anschlußrohrelements andererseits ab. Dabei ist festzuhalten, daß bei Rohrbogen aus Blech - und um solche handelt es sich nach der DE-A-25 36 825 - der Durchmesser des Rohrbogens und der Durchmesser der Anschlußrohrelemente fertigungsbedingt erheblichen Toleranzschwankungen unterliegt. Ist nun der Außendurchmesser des zylindrischen Einsteckabschnitts gegenüber dem Innendurchmesser des jeweils anzuschließenden Anschlußrohrelements untertoleriert - was auf Normabweichungen am Rohrbogen, aber auch auf Normabweichungen am Anschlußrohrelement zurückzuführen sein kann -, so ist ein Zusammenhalt und sei es auch nur ein vorübergehender Zusammenhalt bis zum etwaigen Anbringen einer Löt- oder Schweißnaht, nicht gewährleistet. Das Verlegepersonal hat also Schwierigkeiten, die aneinander anzuschließenden Teile in einer stabilen Relativlage miteinander zu verbinden: die Teile können vielmehr gegeneinander taumeln und sich gegeneinander verdrehen. Eine bauwerksgerechte stabile Lage der beiden Teile relativ zueinander kann nicht - auch nicht vorübergehend - aufrecht erhalten werden, sobald die Verlegeperson die für andere Maßnahmen notwendige Hand von den Teilen abnimmt. Ist andererseits der Einsteckabschnitt des Rohrbogens gegenüber dem Innendurchmesser des Anschlußrohrelements über dimensioniert, so bedarf es - wenn überhaupt möglich - großer Kräfte, um die beiden Teile zusammenzustecken.

Aus der DE-A-29 08 620 ist ein Rohrzwischenstück für Regenfallrohre bekannt, das mit siebartigen Einbauten zum Auffangen von Unrat versehen werden kann. Dabei ist an einem Zwischenstück ein konischer Einsteckabschnitt ausgebildet, welcher auf eine durch konische und dann zylindrische Erweiterung gebildete Schwelle hin verläuft. Der Einsteckabschnitt hat konstante Konizität auf seiner gesamten Länge von der freien Endkante bis zur Schwelle. Bei der Bemessung der Konizität muß deshalb ein Kompromiss gesucht werden zwischen einem günstigen Einfädelungsverhalten und einem günstigen Einsteckverhalten. Ist die Konizität zu gering, der konische Einsteckabschnitt also annähernd zylindrisch, so ist das Einfädelungsverhalten ungünstig. Ist andererseits die Konizität im Hinblick auf ein günstiges Einfädelungsverhalten erheblich, so führt das Einstecken, insbesondere bei Untermaß des konischen Einsteckabschnitts gegenüber dem Innendurchmesser des Anschlußrohrelements zu keiner auch nur annähernd stabilen Ausrichtung des Rohrbogens und des Anschlußelements zueinander. Es ist vielmehr ein erheblicher Taumelspielraum zwischen dem Einsteckabschnitt und dem Anschlußrohrelement gegeben.

Es sind weiter Dachrinnenablaufrohrbogen mit einer geringfügigen stetigen Verjüngung von einem zum anderen Ende bekannt. Die Verjüngung ist dabei im Falle eines Dachrinnenablaufrohrbogens, der sich über einen Nennbogenwinkel von beispielsweise 72° erstreckt, so bemessen, daß die Differenz zwischen dem größeren und dem kleineren Enddurchmesser des Bogens annähernd der doppelten Wandstärke entspricht. Die DIN-Vorschriften lassen bei der Herstellung von Dachrinnenablaufrohrbogen Durchmessertoleranzen zu. Die von den DIN-Vorschriften zugelassene Durchmessertoleranz an dem durchmessergrößeren Ende beträgt ± 1 mm; die gleiche Toleranz ist auch für die durchmessergrößeren Enden der Anschlußelemente vorgeschrieben. Die Toleranzen an den durchmesserkleineren Enden sind nicht definiert, liegen aber aus praktischen Gründen jedenfalls in der gleichen Größenordnung. Dies kann dazu führen, daß bei Zusammenstecken entweder zwei Enden mit äußerst geringer Durchmesserdifferenz ineinander nur schwer eingefädelt werden können oder andererseits zwei Enden ohne Widerstand beim Zusammenschieben ineinandersacken. Beide Fälle sind in der Praxis unerwünscht. In keinem Fall ist die Überlappungslänge eindeutig definiert. Die mangelnde Definition der Überlappungslänge führt dazu, daß die erwarteten relativen Neigungswinkel in der Krümmungsebene von aneinander anschließenden Elementen nicht genau eingehalten sind. Darüber hinaus besteht die Schwierigkeit, zwei Anschlußelemente miteinander zu verlöten, wenn die Durchmesserdifferenz der sich überlappenden Abschnitte zu groß wird. Die Probleme werden noch dadurch vergrößert, daß sich die Querschnitte der Dachrinnenablaufrohrbogen und der zugehörigen Anschlußelemente leicht bei Lagerung und Transport sowie bei der Montage verformen.

Der Erfindung liegt die Aufgabe zugrunde, einen Dachrinnenablaufrohrbogen der eingangs bezeichneten Art so auszugestalten, daß er unter Zulassung der schon bisher gültigen Toleranzen, die in der praktischen Großserienfertigung kaum unterschritten werden können, leichter mit Anschlußelementen in eine Betriebsstellung zusammengeführt werden kann.

Zur Lösung dieser Aufgabe wird erfindungsgemäß vorgeschlagen, daß der Rohrbogen aus Metallblech hergestellt ist und daß der konische Einsteck- und Einweiseabschnitt mit Teilabschnitten unterschiedlicher Konizität ausgeführt ist, nämlich einem endnahen kürzeren Einweiseabschnitt stärkerer Konizität und einem den Einweiseabschnitt mit der Schwelle verbindenden wesentlich längeren Einsteckabschnitt von wesentlich geringerer Konizität und daß die Schwelle von einem gegenüber dem Einsteckabschnitt und dem Hauptabschnitt radial auswärts ausgebeulten Ringwulst gebildet ist.

Bei der erfindungsgemäßen Ausbildung ist durch den kürzeren Einweiseabschnitt das Einfädeln jedenfalls sichergestellt, auch wenn das eine oder das andere der zu verbindenden Rohrteile beispielsweise beim Transport deformiert worden ist. Der Einsteckabschnitt kann deshalb ohne Rücksicht auf das Einfädelungsverhalten optimal in seiner Konizität gewählt werden. Er besitzt geringere Konizität als der Einweiseabschnitt, so daß eine taumelfreie Verbindung zwischen zusammenzufügenden Rohrteilen gewährleistet ist. Andererseits kann die Konizität so gewählt werden, daß - nachdem einmal dank der Einweisekonizität eine Anfangsverbindung hergestellt ist - der Einsteckabschnitt mit einigem Kraftaufwand in das Anschlußrohrelement eingedrückt werden kann bis annähernd die Endkante des Anschlußrohrelements gegen die Schwelle stößt. Die optimale Bemessung der Konizität des Einsteckabschnitts ist dem Fachmann überlassen; sie hängt von den im Einzelfall zu erwartenden Toleranzen ab. Selbst wenn das Zusammenstecken der miteinander zu verbindenden Rohrelemente ein vollständiges Aufschieben des Anschlagrohrelements auf den Einsteckabschnitt bis zum Anstoß an der Schwelle einmal verhindern sollte, so ist gleichwohl eine ausreichende Orientierungsstabilität zwischen den beiden Rohrteilen dank der geringeren Konizität des Einsteckabschnitts gewährleistet. Wenn andererseits durch ungünstige Toleranzpaarung einmal der Einsteckabschnitt in das Anschlußrohrelement einsinken sollte bis zum Anstoß der Endkante des Anschlußrohrelements an der Schwelle, so ist durch den Eingriff zwischen Endkante und Schwelle einerseits und durch die geringere Konizität des Einsteckabschnitts andererseits eine ausreichende Orientierungsstabilität zwischen den zusammengesteckten Rohrteilen gewährleistet.

Dadurch, daß die Schwelle von einem gegenüber dem Einsteckabschnitt und dem Hauptabschnitt radial auswärts ausgebeulten Ringwulst gebildet ist, läßt sich ein auch bei ungünstigen Toleranzverhältnissen zuverlässiger Anschlag gewährleisten, ohne daß der Rohrbogen in seinem Einsteckabschnitt einerseits und seinem Hauptabschnitt andererseits mit einer großen, der Schwellenbildung dienenden Durchmesserdifferenz ausgeführt werden müßte. Dies erleichtert die Herstellung des Rohrbogens.

Die Erfindung schließt nicht aus, daß auch noch im Bereich des Hauptabschnitts eine geringfügige konische Erweiterung zum durchmessergrößeren Ende hin vorliegt, wenn beispielsweise die zur Herstellung bekannter auf ihrer ganzen Länge gleichmäßig konischer Dachrinnenablaufrohrbogen eingesetzten Werkzeuge weiter verwendet werden sollen.

Die Erfindung ist bei allen metallischen Dachrinnenablaufrohrbogen anwendbar, insbesondere bei solchen aus Kupferblech, Zinkblech, Aluminiumblech, Edelstahlblech sowie verzinktem und kunststoffbeschichteten Stahlblech. Die Rohrbogen können aus Halbschalen zusammengesetzt sein, die in einer zur Krümmungsebene senkrechten Zylinderfläche durch jeweils eine Naht miteinander verbunden sind. Dabei kann die Naht eine gestoßene oder überlappte Schweiß- oder Lötnaht oder eine Falznaht sein.

Da die in Frage kommenden Materialien bei den üblichen Verformungsvorgängen in ihrer Wandstärke nur wenig veränderbar sind, gelten die Angaben für die Konizität, die hier jeweils für die Außenseite gemacht sind entsprechend auch für die Innenumfangsfläche des Regenrinnenablaufrohrbogens.

Die Herstellung des konischen Einsteckabschnitts, des konischen Einweiseabschnitts und des Ringwulsts erfolgt in üblicher Blechverformungstechnik.

Die Konizität des Einsteckabschnitts kann etwa dahin definiert werden, daß sie einer Durchmesserdifferenz zwischen dem wulstnahen, vergrößerten Durchmesser einerseits und dem wulstfernen, jedoch außerhalb der Einweisekonizität liegenden verringerten Durchmesser andererseits von mindestens dem 0,5-fachen, vorzugsweise mindestens dem 2,5-fachen, der Wandstärke entspricht. Eine andere Festlegung für die Konizität des Einsteckabschnitts besteht darin, daß sie ca. 0,5° bis 3°, vorzugsweise ca. 1° bis 2°, jeweils gegenüber der Achse beträgt.

Die Einweisekonizität erstreckt sich bevorzugt nur über ca. 5% bis 20%, vorzugsweise ca. 8% bis 12%, der Länge des konischen Einsteckabschnitts. Das Maß der Einweisekonizität liegt beispielsweise bei ca. 10° bis 25°, vorzugsweise ca. 15°, jeweils gegenüber der Achse.

Für die Bemessung des Ringwulsts gilt, daß er sich an der Außenfläche um ca. 1 mm bis 3 mm, vorzugsweise ca. 2 mm, über die Außenfläche erhebt, bevorzugt ist der Ringwulst dabei im Querschnitt halbkreisförmig. Dabei kann sich der Ringwulst in Bogenlängsrichtung über ca. 2 mm bis ca. 7 mm, vorzugsweise ca. 5 mm, erstrecken.

Um zwei aufeinanderfolgende Anschlußelemente in die richtige Winkellage gegeneinander ohne Schwierigkeiten einstellen zu können, wird vorgeschlagen, daß der Dachrinnenablaufrohrbogen im Bereich des Ringwulsts und im Bereich des durchmessergrößeren Endes jeweils mindestens eine, vorzugsweise zwei diametral gegenüberliegende Justiereinprägungen aufweist.

Die Erfindung betrifft ferner einen Dachrinnenablaufrohrleitungsabschnitt, hergestellt unter Verwendung eines wie oben definierten Dachrinnenablaufrohrbogens und eines Anschlußelements. Für diesen Abschnitt wird vorgeschlagen, daß der konische Einsteckabschnitt in das Anschlußelement bis zum Anstoß an dem Ringwulst ggf. unter Druck eingesteckt ist. Dabei kann - und dies ist ein besonderer Vorteil - eine Verlötung zwischen dem Dachrinnenablaufrohrbogen und dem Anschlußelement im Bereich des Ringwulsts vorgesehen sein, dort wo das Anschlußelement mit seiner Endkante an diesen Ringwulst anstößt oder angenähert ist. Unabhangig von Durchmessertoleranzen kann bei den angegebenen Abmessungen des Ringwulsts eine Verlötung in jedem Fall leicht durchgeführt werden.

Die beiliegenden Figuren erläutern die Erfindung. Es stellen dar:

Fig. 1 einen erfindungsgemäßen Dachrinnenablaufrohrbogen in Seitenansicht;

Fig. 2 einen Schnitt in der Krümmungsebene durch den konischen Endabschnitt der Fig. 1 und

Fig. 3 den Anschluß eines Dachrinnenablaufrohrbogens gemäß Fig. 1 an einen geradlinigen Rohrabschnitt.

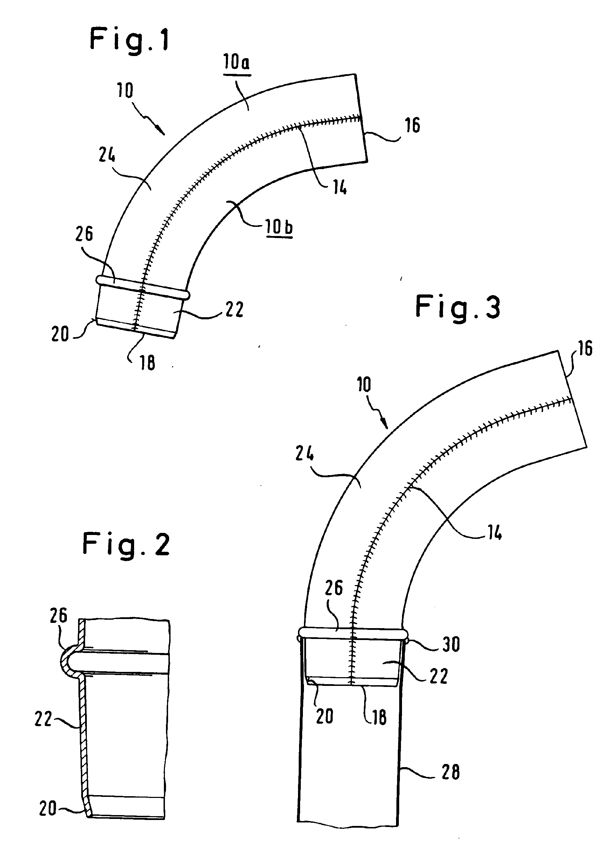

In Fig. 1 ist der Dachrinnenablaufrohrbogen ganz allgemein mit 10 bezeichnet. Er ist aus zwei Teilschalen 10a und 10b zusammengesetzt. Diese Teilschalen 10a und 10b sind in zwei Nähten zusammengesetzt, von denen nur eine Naht 14 erkennbar ist. Die andere Naht liegt hinter der Zeichenebene. Beide Nähte liegen in einer senkrecht auf der der Zeichenebene entsprechenden Krümmungsebene stehenden Zylinderfläche.

Das eine, durchmessergrößere Ende des Dachrinnenablaufrohrbogens ist mit 16 bezeichnet, das andere, durchmesserkleinere Ende mit 18. Angrenzend an das durchmesserkleinere Ende 18 erkennt man eine Einweisekonizität 20 mit einem Konuswinkel von ca. 15° und anschließend an diese Einweisekonizität 20 einen konischen Endabschnitt 22 mit einer Konizität von ca. 1°. Die Einweisekonizität 20 erstreckt sich über ca. 5 mm, während sich der konische Endabschnitt 22 (ohne die Einweisekonizität) über ca. 43 mm erstreckt. Zwischen dem konischen Endabschnitt 22 und dem Hauptabschnitt 24 ist ein nach außen gewölbter Ringwulst 26 vorgesehen, der sich in Bogenlängsrichtung über ca. 5 mm erstreckt und um ca. 2 mm über die Außenoberfläche des Blechs vorspringt.

In Fig. 3 erkennt man einen Dachrinnenablaufrohrbogen 10 in Verbindung mit einem geradlinigen Anschlußrohr 28. Der konische Endabschnitt 22 ist in das obere, erweiterte Ende des geradlinigen Rohrabschnitts 28 eingesteckt, dessen Nenndurchmesser dem Nennwert des durchmessergrößeren Endes 16 entspricht. Durch eine Lötnaht 30 im Bereich des Ringwulsts 26 sind die beiden Elemente verbunden.

## Patentansprüche

1. Dachrinnenablaufrohrbogen mit einem durchmessergrößeren und einem durchmesserkleineren Ende, wobei an dem durchmesserkleineren Ende (18) ein konischer Einsteck- und Einweiseabschnitt (22,20) vorgesehen ist, der über eine Schwelle (26) in einen Hauptabschnitt (24) übergeht,
dadurch gekennzeichnet,
daß der Rohrbogen aus Metallblech hergestellt ist und daß der konische Einsteck- und Einweiseabschnitt (22,20) mit Teilabschnitten (22,20) unterschiedlicher Konizität ausgeführt ist, nämlich einem endnahen kürzeren Einweiseabschnitt (20) stärkerer Konizität und einem den Einweiseabschnitt (20) mit der Schwelle (26) verbindenden wesentlich längeren Einsteckabschnitt (22) von wesentlich geringerer Konizität und daß die Schwelle von einem gegenüber dem Einsteckabschnitt (22) und dem Hauptabschnitt (24) radial auswärts ausgebeulten Ringwulst (26) gebildet ist.

2. Dachrinnenablaufrohrbogen nach Anspruch 1, **dadurch gekennzeichnet,** daß die Konizität des Einsteckabschnitts (22) einer Durchmesserdifferenz zwischen deren wulstnahem, vergrößerten Durchmesser einerseits und deren wulstfernem, jedoch außerhalb der Einweisekonizität (20) liegenden verringerten Durchmesser andererseits von mindestens dem 1,5-fachen, vorzugsweise mindestens dem 2,5-fachen der Wandstärke entspricht.

3. Dachrinnenablaufrohrbogen nach Anspruch 1 oder 2, **dadurch gekennzeichnet,** daß die Konizität des konischen Einsteckabschnitts (22) ca. 0,5° bis ca. 3°, vorzugsweise ca. 1° bis ca. 2°, beträgt.

4. Dachrinnenablaufrohrbogen nach einem der Ansprüche 1 bis 3, **dadurch gekennzeichnet,** daß sich die Einweisekonizität (20) über ca. 5 % bis ca. 20 %, vorzugsweise ca. 8 % bis ca. 12 % der Länge des konischen Einsteckabschnitts (22) erstreckt.

5. Dachrinnenablaufrohrbogen nach einem der Ansprüche 1 bis 4, **dadurch gekennzeichnet,** daß die Einweisekonizität (20) ca. 10° bis ca. 25°, vorzugsweise ca. 15°, beträgt.

6. Dachrinnenablaufrohrbogen nach einem der Ansprüche 1 bis 5, **dadurch gekennzeichnet,** daß sich der Ringwulst (26) an der Außenfläche um ca. 1 mm bis ca. 3 mm, vorzugsweise ca. 2 mm, über die Außenfläche erhebt.

7. Dachrinnenablaufrohrbogen nach einem der Ansprüche 1 bis 6, **dadurch gekennzeichnet,** daß der Ringwulst (26) sich in Bogenlängsrichtung über ca. 2 mm bis ca. 7 mm, vorzugsweise ca. 5 mm, erstreckt.

8. Dachrinnenablaufrohrbogen nach einem der Ansprüche 1 bis 7, **dadurch gekennzeichnet,** daß er im Bereich des Ringwulsts (26) und im Bereich des durchmessergrößeren Endes (16) jeweils mindestens eine, vorzugsweise zwei diametral einander gegenüberliegende Justiereinprägungen aufweist zur Drehjustierung gegenüber entsprechenden Justiereinprägungen von Anschlußabschnitten.

9. Dachrinnenablaufrohrbogen nach einem der Ansprüche 1 bis 8, **dadurch gekennzeichnet,** daß sein Querschnitt auf der von dem konischen Einsteckabschnitt (22) abgelegenen Seite des Ringwulstes annähernd konstant ist.

10. Dachrinnenablaufrohrbogen nach einem der Ansprüche 1 bis 8, **dadurch gekennzeichnet,** daß sein Querschnitt zu der von dem konischen Einsteckabschnitt (22) abgelegenen Seite des Ringwulstes (26) hin geringfügig abnimmt, jedoch mit einem Gradienten, der wesentlich kleiner ist als der der Konizität des konischen Einsteckabschnitts (22) entsprechende Gradient.

11. Dachrinnenablaufrohrleitungsabschnitt, hergestellt unter Verwendung eines Dachrinnenablaufrohrbogens nach einem der Ansprüche 1 bis 10 und eines Anschlußelements (28), insbesondere eines entsprechenden weiteren Dachrinnenablaufrohrbogens oder eines geradlinigen Rohrabschnitts (28), **dadurch gekennzeichnet,** daß der konische Einsteckabschnitt (22) in das Anschlußelement (28) bis zum Anstoß an dem Ringwulst (26) ggf. unter Druck eingesteckt ist.

12. Dachrinnenablaufrohrleitungsabschnitt nach Anspruch 11, **dadurch gekennzeichnet,** daß der Dachrinnenablaufrohrbogen (10) mit dem Ende des Anschlußelements (28) im Bereich des Ringwulsts (26) verlötet ist.

## Claims

1. A roof gutter waste pipe bend having a larger diameter end and a smaller diameter end, provided at the smaller diameter end (18) with a conical push-in and guide portion (22, 20) which merges into a main portion (24) via a step (26), characterised in that the pipe bend is made from sheet metal and in that the conical push-in and guide portion (22, 20) is constructed with partial portions (22, 20) of different conicity, namely a shorter guide portion (20) which is close to the end and which is of more marked conicity and a substantially longer push-in portion (22) of substantially less conicity for connecting the guide portion (20) to the step (26) and in that the step is formed by an annular bead (26) which bulges radially outwardly in relation to the push-in portion (22) and the main portion (24).

2. A roof gutter waste pipe bend according to Claim 1, characterised in that the conicity of the push-in portion (22) corresponds to a difference in diameter between the enlarged diameter close to the bead on the one hand and the reduced diameter which is remote from the bead but outside the guide conicity (20) on the other and amounting to at least 1.5 and preferably at least 2.5 times the wall thickness.

3. A roof gutter waste pipe bend according to Claim 1 or 2, characterised in that the conicity of the conical push-in portion (22) amounts to approx. 0.5° up to approx. 3° and preferably approx. 1° up to approx. 2°.

4. A roof gutter waste pipe bend according to one of Claims 1 to 3, characterised in that the push-in conicity (20) extends over approx. 5% up to approx. 20% and preferably approx. 8% up to approx. 12% of the length of the conical push-in portion (22).

5. A roof gutter waste pipe bend according to one of Claims 1 to 4, characterised in that the guide conicity (20) amounts to approx. 10° up to approx. 25° and preferably approx. 15°.

6. A roof gutter waste pipe bend according to one of Claims 1 to 5, characterised in that the annular bead (26) on the outer surface is raised above the outer surface by approx. 1 mm to approx. 3 mm and preferably by approx. 2 mm.

7. A roof gutter waste pipe bend according to one of Claims 1 to 6, characterised in that the annular bead (26) extends in the longitudinal direction of the bend over approx. 2 mm up to approx. 7 mm and preferably approx. 5 mm.

8. A roof gutter waste pipe bend according to one of Claims 1 to 7, characterised in that in the region of the annular bead (26) and in the region of the larger diameter end (16), the pipe bend has in each case at least one but preferably two diametrically opposed adjustment indentations for rotary adjustment in relation to corresponding adjustment indentations in connecting portions.

9. A roof gutter waste pipe bend according to one of Claims 1 to 8, characterised in that its cross-section is virtually constant on that side of the annular bead which is remote from the conical push-in portion (22).

10. A roof gutter waste pipe bend according to one of Claims 1 to 8, characterised in that its cross-section diminishes slightly towards the side of the annular bead (26) which is remote from the conical push-in portion (22) but with a gradient which is substantially smaller than the gradient corresponding to the conicity of the conical push-in portion (22).

11. A roof gutter waste pipe portion produced by using a roof gutter waste pipe bend according to one of Claims 1 to 10 and a connecting element (28), particularly a corresponding further roof gutter waste pipe bend or a straight pipe portion (28), characterised in that the conical push-in portion (22) is, possibly with pressure, inserted into the connecting element (28) until it abuts the annular bead (26).

12. A roof gutter waste pipe portion according to Claim 11, characterised in that the roof gutter waste pipe bend (10) is soldered to the end of the connecting element (28), in the region of the annular bead (26).

**Revendications**

1. Tuyau de descente coudé présentant une extrémité de plus grand diamètre et une extrémité de plus petit diamètre, une partie d'insertion et de guidage (22, 20) conique, qui, par un épaulement (26), se prolonge par une partie principale (24), étant prévue à l'extrémité (18) de plus petit diamètre, caractérisé en ce que le tuyau coudé est réalisé dans une tôle métallique et en ce que la partie conique d'insertion et de guidage (22, 20) est réalisée avec des éléments partiels (22, 20) de conicité différente, à savoir une partie de guidage (20) plus courte, proche de l'extrémité, de conicité plus forte et une partie d'insertion (22), nettement plus longue, reliant la partie de guidage (20) à l'épaulement (26), de conicité nettement réduite et en ce que l'épaulement est formé par un bourrelet annulaire (26) bombé radialement vers l'extérieur, par rapport à la partie d'insertion (22) et à la partie principale (24).

2. Tuyau de descente coudé selon la revendication 1, caractérisé en ce que la conicité de la partie d'insertion (22) correspond à une différence de diamètre entre son diamètre agrandi, proche du bourrelet d'une part et son diamètre réduit, éloigné du bourrelet, mais situé à l'extérieur de la conicité de guidage (20) d'autre part, de 1,5 fois au moins, de préférence 2,5 fois au moins, l'épaisseur de la paroi.

3. Tuyau de descente coudé selon la revendication 1 ou 2, caractérisé en ce que la conicité de la partie d'insertion (22) conique est comprise entre 0,5° et 3° environ, de préférence entre 1° et 2° environ.

4. Tuyau de descente coudé selon l'une des revendications 1 à 3, caractérisé en ce que la conicité de guidage (20) s'étend sur 5 % à 20 % environ, de préférence entre 8 % et 12 % environ de la longueur de la partie d'insertion (22) conique.

5. Tuyau de descente coudé selon l'une des revendications 1 à 4, caractérisé en ce que la conicité de guidage (20) est comprise entre 10° et 25° environ de préférence égale à 15° environ.

6. Tuyau de descente coudé selon l'une des revendications 1 à 5, caractérisé en ce que le bourrelet annulaire (26), situé sur la surface extérieure, est en relief de 1 mm à 3 mm environ, de préférence de 2 mm environ, par rapport à la surface extérieure.

7. Tuyau de descente coudé selon l'une , des revendications 1 à 6, caractérisé en ce que le bourrelet annulaire (26) s'étend dans la direction longitudinale du tuyau coudé, sur 2 mm à 7 mm environ, de préférence sur 5 mm environ.

8. Tuyau de descente coudé selon l'une des revendications 1 à 7, caractérisé en ce qu'il présente, dans la région du bourrelet annulaire (26) et dans la région de l'extrémité (16) de plus grand diamètre, au moins une, de préférence deux, empreintes d'ajustage, diamétralement opposées l'une à l'autre, pour l'ajustage en rotation par rapport à des empreintes d'ajustage correspondantes de parties de raccord.

9. Tuyau de descente coudé selon l'une des revendications 1 à 8, caractérisé en ce que sa section transversale est à peu près constante sur le côté du bourrelet annulaire, éloigné de la partie d'insertion (22) conique.

10. Tuyau de descente coudé selon l'une des revendications 1 à 8, caractérisé en ce que sa section transversale diminue légèrement vers le côté du bourrelet annulaire (26), éloigné de la partie d'insertion (22) conique, mais avec un gradient qui est nettement inférieur à celui du gradient correspondant à la conicité de la partie d'insertion 22 conique.

11. Elément de tuyauterie de descente, réalisé par utilisation d'un tuyau de descente coudé selon l'une des revendications 1 à 10 et d'un élément de raccord (28), en particulier d'un autre tuyau de descente coudé correspondant ou d'un élément de tuyau (28) rectiligne, caractérisé en ce que la partie d'insertion (22) conique est insérée dans l'élément de raccord (28), jusqu'à venir en butée contre le bourrelet annulaire (26), éventuellement sous pression.

12. Elément de tuyauterie de descente selon la revendication il, caractérisé en ce que le tuyau de descente coudé (10) est brasé avec l'extrémité de l'élément de raccord (28), dans la région du bourrelet annulaire (26).

# Fig.1

# Fig.3

# Fig.2